# EUROPEAN PATENT SPECIFICATION

(11) **EP 1 225 120 B1**
(45) Date of publication and mention of the grant of the patent: **09.04.2008**
(21) Application number: 02250308.0
(22) Date of filing: 16.01.2002
(51) Int. Cl.: B62D 27/04, B60K 11/02

(54) **Connection system particularly for automotive components**
Verbindungssystem insbesondere für Automobilkomponenten
Système de connexion en particulier pour composants d'automobile

(30) Priority: 17.01.2001 GB 0101296
(43) Date of publication of application: 24.07.2002
(73) Proprietor: Calsonic Kansei UK Limited, Llanelli, Carmarthenshire SA14 8HU (GB)
(72) Inventor: Davies, Christopher John, Mid Glamorgan CF36 3YS (GB)
(74) Representative: Davies, Gregory Mark

(56) References cited:
- EP-A- 0 128 878
- DE-A- 3 806 091
- DE-A- 4 414 223
- GB-A- 830 143
- GB-A- 2 126 621
- US-A- 4 388 967
- US-A- 5 311 933

## Description

The present invention relates to a connection system, particularly to a connection system for vehicle components to be situated in a vehicle engine compartment.

Vehicle components to be mounted in a vehicle engine compartment typically need to be mounted to one another. For example condensers charge air coolers or fans may require mounting to a vehicle radiator. It is important that the mounting or connection means utilised permits convenient mounting, dismounting or connection and disconnection for replacement or repair, or ease of assembly during initial vehicle production. Space is also at a premium within the engine compartment and the connection means should therefore permit connection of components or sub-assemblies with the minimum of space being used overall. This is commonly referred to as minimum space 'envelope'.

European Patent 0128878 describes a device for anchoring a transverse radiator cowling or grille to the front part of the bodywork of a motor vehicle, comprising at least one hok member which can be attached to the front part of the bodywork of the vehicle and has a substantially horizontal resilient lug defining a hook tooth, and therebeneath, a bearing and reaction surface, and at least one corresponding tab projecting from the upper side of the grille in a position spaced from the ends thereof and defining a complementary hook tooth which, in the condition in which the tab rests on the bearing surface of the hook member, snap-engages the hook tooth of the resilient lug of this hook member.

US Patent 5311933 describes a heat exchanger comprising a core of tubes engaged into header plates with a groove and an upstanding wall about the periphery. The upstanding wall has spaced of set tabs in openings which engage a shoulder along the rim of the tank. Also included is a tool to bias the tab for tank removal.

German patent DE4414223, which discloses the preamble of claim 1, describes an arrangement wherein two body parts to be connected are maintained at a relative distance by plastic spacers in the area of the fastening clips. The sealing element for the gap is formed by a plastics sealing bead. Each distance element is formed by an additional clip, which is fitted to the fastening clip. The additional clip consists of a heat-resistant plastics, e.g. polyamide etc. It has a straight section, with a release device at one end, from which extends a narrow flexible bracket.

A beneficial connection system has now been devised.

According to a first aspect, the present invention provides a connection system for connecting components, particularly automotive components, according to claim 1.

The detent element preferably comprises a resiliently flexible arm, beneficially having a resiliently flexible portion and desirably a distal portion provided with a detent formation.

The detent element is flexible independently of other restraint formations retaining the male bracket arrangement. This feature provides significant benefit in that the connected components are retained against direct separation from close connected relationship by the outer restraining portion (which is typically rigid and not susceptible to deflection). The detent element therefore does not serve to provide the main connection against direct separation but primarily serves to prevent separation by sliding of the male bracket out of the mouth of the female bracket arrangement.

The lead in surface aids assembly. As the male bracket is inserted into the mouth of the female bracket arrangement via the lead in surface the detent element is forced resiliently outwardly, snapping back to a normal position Lo retain the male bracket arrangement securely. The detent arm may subsequently be flexed manually outwardly to permit retraction of the male bracket from the female bracket should this be required.

The detent element beneficially includes an actuation extension standing proud of the outer restraining portion of the female bracket element. The actuation extension preferably projects upwardly and outwardly from the outer restraining portion of the female bracket element. This provides ease of manual actuation.

The male bracket element, when matingly engaged with the female bracket element, preferably has a portion which extends outwardly through the mouth of the female arrangement beyond the detent element. It is therefore not required that the detent shoulder abuts the uppermost portion of the male bracket element.

The male bracket arrangement beneficially includes surfaces arranged to abut or lie closely adjacent the opposed restraining portions of the female bracket arrangement. Desirably, the male bracket arrangement includes a surface arranged to rest upon a corresponding closed end portion of the gap between the opposed restraining portions of the female bracket arrangement.

One of the bracket arrangements is beneficially carried by a vehicle radiator, the other of the bracket arrangements being carried by a component for connection to the radiator. The component for mounting to the vehicle radiator may, for example be a fan, a condenser, or a charge air cooler.

A plurality of female bracket elements are preferably carried by a respective component at spaced portions, the male bracket elements being carried by another respective component at a corresponding spaced relationship for engagement with corresponding respective female bracket arrangements.

according to a further aspect, the invention provides an assembly for mounting in a vehicle engine compartment, the assembly comprising components mounted to one another using a connection system as defined herein.

According to a further aspect, the invention provides a method of assembling components provided with respective brackets in accordance with the connection system as defined herein, the method comprising engaging the male bracket member with a respective female bracket member to a position in which the detent element engages in the detent position.

The invention will now be further described in a specific embodiment by way of example only and with reference to the accompanying drawings, in which:
Figure 1 is a schematic side view of a connection system according to the invention;
Figure 2 is a front view of the arrangement of Figure 1;
Figure 3 is a sectional view along section C-C in Figure 2;
Figure 4 is a perspective view of the system in the configuration shown in Figures 1 to 3;
Figure 5 is a front end view of the connection system in fully engaged (mating) position;
Figure 6 is a plan view of the arrangement in the configuration of Figure 5;
Figure 7 is a sectional view along A-A in Figure 5;
Figures 8 and 9 are perspective views of che system in engaged (mated) configuration;
Figure 10 is a side view of the arrangement in engaged (mated) configuration; and
Figures 11 and 12 are further perspective views of the system in engaged (mated) configuration.

Referring to the drawings, there is shown a connection system (generally designated 1) comprising a male bracket piece 2 and a female bracket piece 3. The connection system is particularly suited to a mounting together of components to be situated in a vehicle engine compartment where space, ease of assembly and working, and other considerations are extremely important.

In the specific embodiment shown, female bracket piece 3 is formed integrally with a plastics header tank 13 of a vehicle radiator. Bracket 2 is, for the purposes of this explanatory embodiment, an aluminium component having a collar 14 brazed to a header of an airconditioning condenser (not shown).

Male bracket piece 2 includes a plate portion 4 extending away from the collar 14 including, at its bottom edge, an upturned male engagement formation 5.

The female bracket piece 3 comprises a slot or gap 6 defined between and inner restraint surface 7 and an outer restraint surface 8, outer restraint surface 8 being provided on restraint finger 9. Surfaces 7 and 8 meet at a curved seat portion 10. A pair of restraint finger portions 9, 9' are provided side by side adjacent a respective interposed detent element 11, which is connected at a resilient connection (waisted portion 12) with the body of the female bracket piece 3 intermediately respective outer restraining fingers 9, 9'.

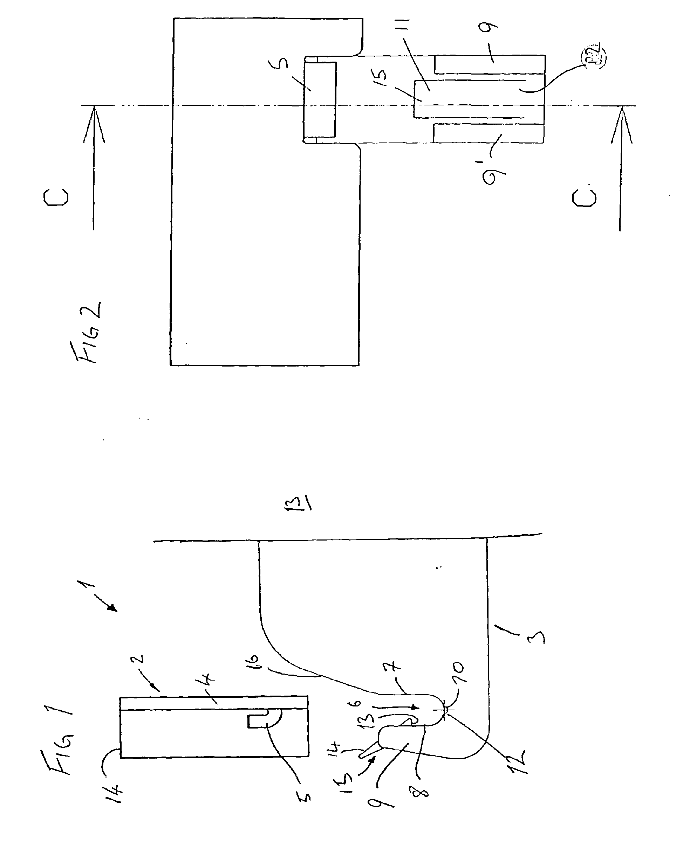

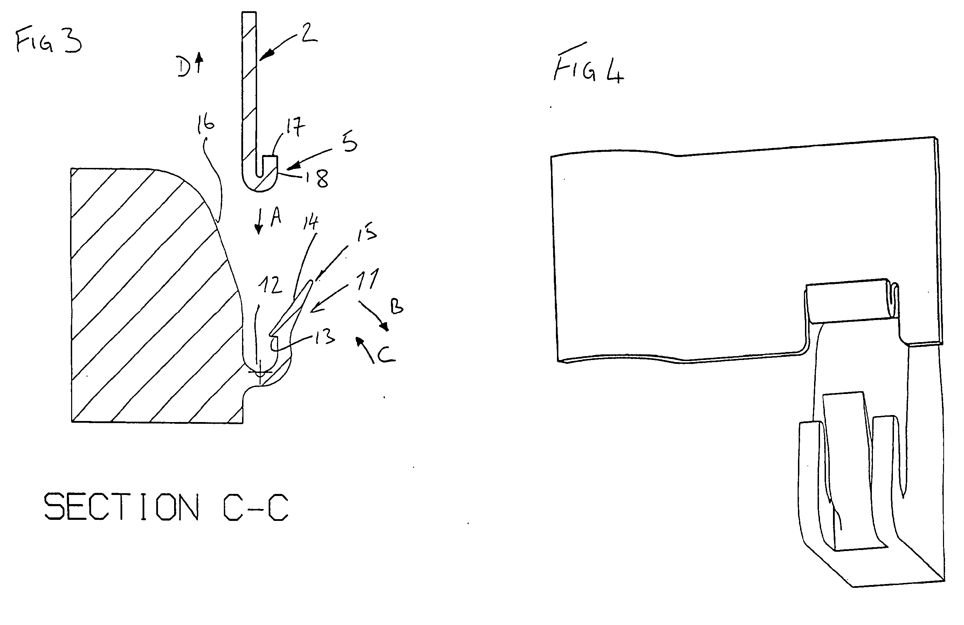

The resilient connection 12 permits the detent element 11 to flex toward and away from slot or gap 6 (into and out of the paper in Figure 2). As shown clearly in, for example, Figure 3, the detent element 11 includes a detent shoulder 13 extending partially into the slot or gap 6. Detent shoulder 13, forms an apex with a sloping lead-in surface 14 which also defines an actuation extension 15 for the detent element 11. The inner restraining surface 7 leads to a lead-in surface 14, sloping away from slot or gap 6. The out-turned male engagement formation 5 is shaped and dimensioned to fit snugly within the seat 10 formed between opposed inner restraining surface 7 and outer restraining surface 8 (seat 10).

When the male bracket piece 2 approaches the mouth slot of gap 6 (in the direction of arrow A in Figure 3) the male engagement formation 5 engages lead-in surface 14 of detent element 11, forcing detent element 11 to flex outwardly (arrow B in Figure 3) flexing about the resilient flexible connection defined by waisted portion 12. As the shoulder 13 passes by the terminal surface 17 of male engagement formation 5, the detent element 11 snaps back resiliently into its original position (arrow C in Figure 3) with the male bracket 2 inhibited from retraction vertically (in the direction of arrow D) by the secure abutment of shoulder 13 with terminal surface 17.

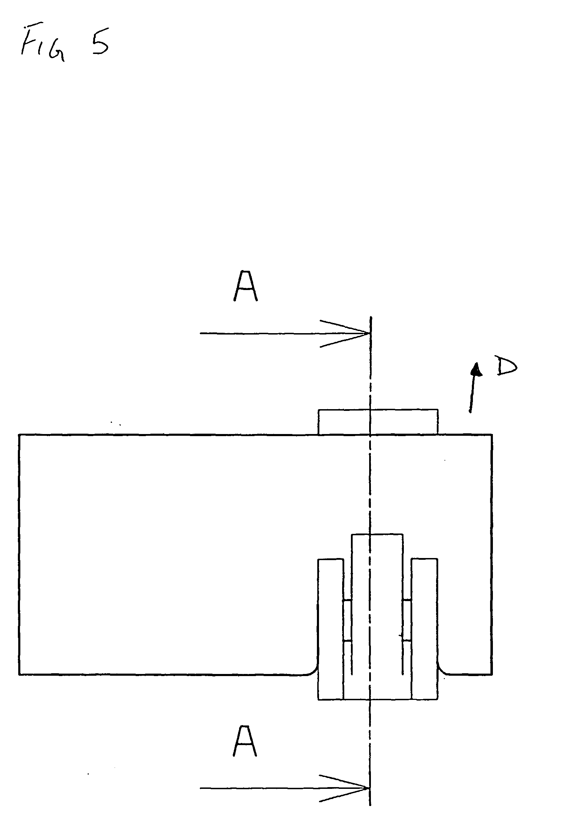

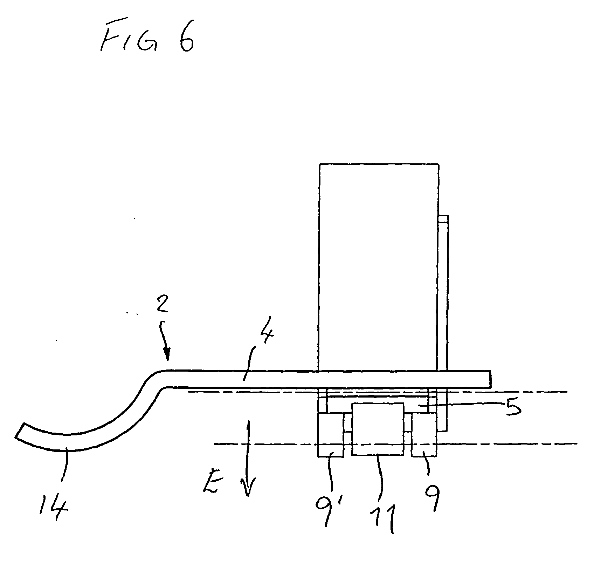

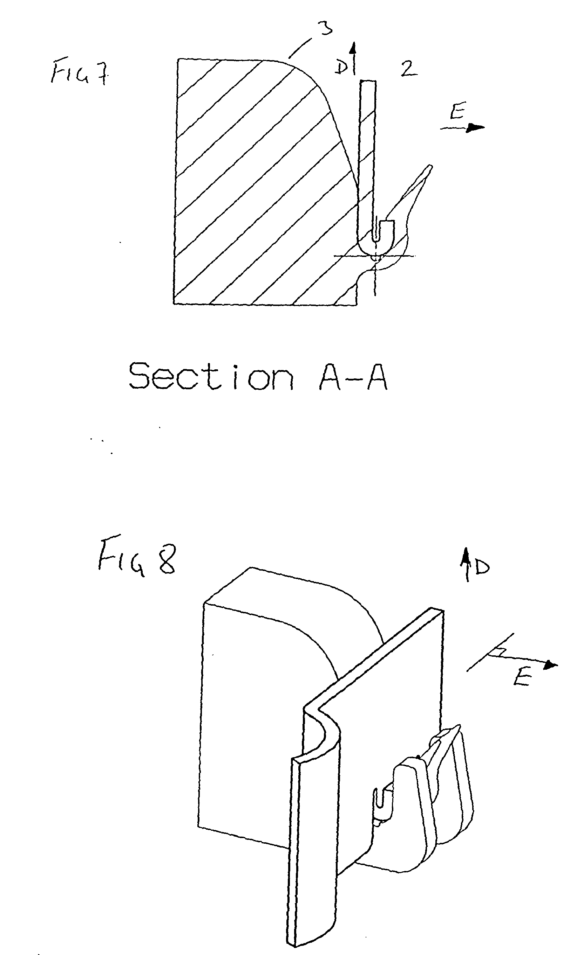

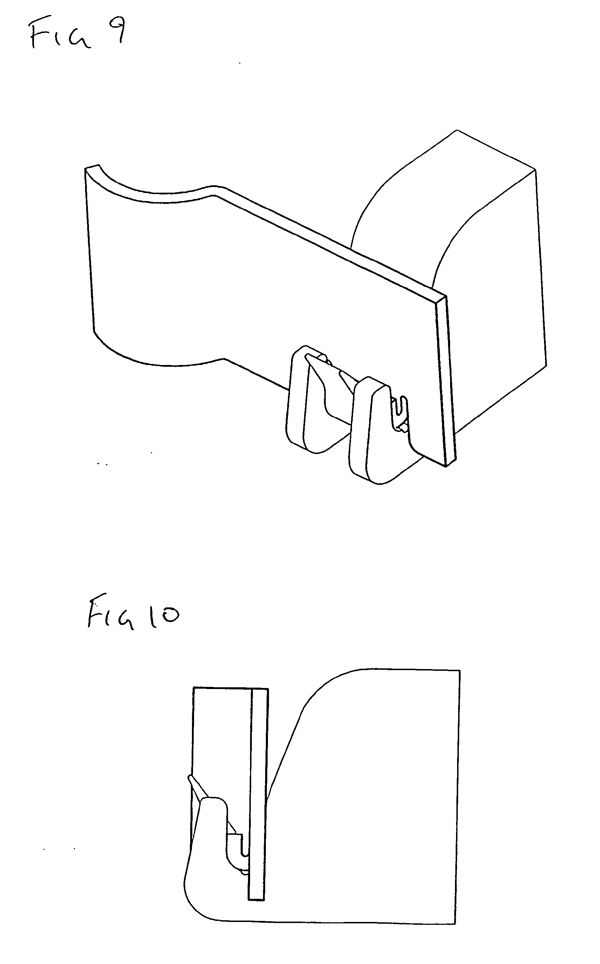

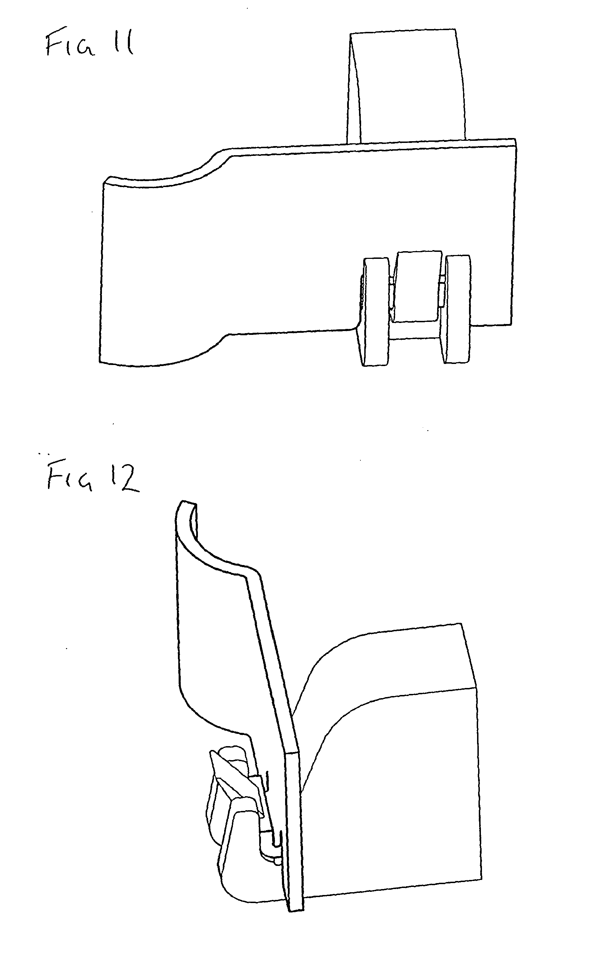

In the engaged position, as shown in Figures 5 to 12, separation of the bracket pieces 2, 3 in the direction of arrow E is substantially inhibited by abutment of the outer surface 18 of male engagement formation 5 with the outer restraint surfaces 8, 8' of restraint fingers 9, 9'. The connection of fingers 9, 9' is relatively rigid and designed to inhibit outward flexing of fingers 9 relative to the main body of the female bracket piece 3. In this way, separation of the connector components in the direction of arrow E is inhibited by the rigid fingers 9, 9' rather than resistance bearing against the detent element 11. Detent element 11 serves primarily to prevent separation in the direction of arrow D.

Tn order to release connection between male and female bracket pieces 2, 3 and permit separation in the direction of arrow D, the extension 14 of element 11 is susceptible to manual manipulation to flex element 11 in the direction of arrow B (see Figure 3) permitting the abutting registration of detent shoulder 13 with terminal surface 17 to be released. The extension portion 14 of detent element 11 extends upwardly and outwardly clear of the uppermost portion of respective restraint fingers 9, 9'.

The connection system described herein provides convenient means of connection of components, particularly automotive components, requiring ease of assembly and disassembly in a limited (minimised) space envelope. The connection is strong and of good integrity, preventing separation of components in a transverse direction, and also permits manual actuation of a detent to overcome connection in a perpendicular direction.

## Claims

1. A connection system (1) for mounting components in a vehicle engine compartment, the system comprising:
a male bracket arrangement (2); and,
a female bracket arrangement (3), the female bracket arrangement (3) comprising opposed inner and outer (9,9') restraining portions defining a gap between them, the male bracket arrangement mating with the female bracket arrangement via the gap between the opposed restraining portions, the female bracket arrangement further comprising a releasable detent element (11) where the outer restraining portions (9,9') are finger portions and are provided either side adjacent of the detent element arranged to face the male arrangement when mated, where said releasable detent element is movable between a detent position in which retraction of the mated male arrangement portion from the female arrangement is substantially inhibited, and a release position in which retraction of the male arrangement portion out of engagement with the female arrangement is permitted, the detent element being resiliently biased by a resilient flexible connection (12) comprising the female arrangement and wherein the outer restraining finger portions remain substantially un-deflected when the detent element resiliently flexes between the detent and release positions and the detent element includes an actuation extension (14) which projects upwardly and outwardly from the outer restraining portion of the female bracket, **characterised in that** the detent element includes a detent shoulder (13) spanning at least part-way across the gap between the opposed restraint portions and wherein the detent element includes an inclined lead-in surface (14) terminating at an apex with the detent shoulder.

2. A connection system according to claim 1, wherein the detent element (11) comprises a resiliently flexible arm.

3. A connection system according to any preceding claim, wherein the male bracket element, when matingly engaged with the female bracket element, has a portion which extends outwardly through the mouth of the female arrangement beyond the detent element.

4. A connection system according to any preceding claim, wherein the make bracket arrangement includes surfaces arranged to abut or lie closely adjacent the opposed restraining portions of the female bracket arrangement.

5. A connection system according to any preceding claim, wherein the male bracket arrangement includes a surface arranged to rest upon a corresponding closed end portion of the gap between the opposed restraining portions of the female bracket arrangement.

6. A connection system according to any preceding claim, wherein one of the bracket arrangements is carried by a vehicle radiator, the other side of the bracket arrangements being carried by a component for connection to the radiator.

7. A connection system according to claim 6, wherein the component for mounting to the vehicle radiator is a fan or a condenser or a charge air cooler.

8. A connection system comprising a plurality of systems according to any preceding claim, the plurality of female bracket elements being carried by a respective component at spaced portions, the male bracket elements being carried by another respective component at a corresponding spaced relationship for engagement with corresponding respective female bracket arrangements.

9. An assembly for mounting in a vehicle engine compartment, **characterised in that** the assembly comprises components mounted to one another using a connection system according to any preceding claim.

10. An assembly for mounting in a vehicle engine compartment according to claim 9, the assembly comprising a vehicle radiator and another component mounted adjacent the face of the radiator employing a connection system according to any of claims 1 to 8.

11. A method of assembling components **characterised in that** the components are provided with respective brackets in accordance with the connection system according to any of claims 1 to 8, the method comprising engaging the male bracket member with a respective female bracket member to a position in which the detent element engages in the detent position.

## Patentansprüche

1. Verbindungssystem (1) zum Befestigen von Komponenten in einem Fahrzeugmotorraum,
mit einem Halterungseinsatz (2) und einer Halterungsaufnahme (3),
wobei die Halterungsaufnahme (3) einander gegenüberliegende innere und äußere Halteteile (9, 9') aufweist, die einen Zwischenraum zwischen sich bilden, und der Halterungseinsatz mit der Halterungsaufnahme im Zwischenraum zwischen den sich gegenüberliegenden Halteteilen zusammenwirkt,
wobei die Halterungsaufnahme darüber hinaus ein lösbares Verriegelungselement (11) aufweist, die äußeren Halteteile (9, 9') Haltefinger sind und auf jeder Seite neben dem Verriegelungselement so angeordnet sind, dass sie im zusammengesetzten Zustand auf den Halterungseinsatz zeigen,
wobei das lösbare Verriegelungselement zwischen einer Verriegelungsposition bewegbar ist, in der ein Herausziehen des eingesetzten Halterungseinsatzes aus der Halterungsaufnahme im Wesentlichen verhindert wird, und einer Freigabeposition, in der ein Herausziehen des eingesetzten Halterungseinsatzes aus der Halterungsaufnahme möglich ist,
wobei das Verriegelungselement durch eine federnde flexible Verbindung (12) mit der Halterungsaufnahme federnd vorgespannt ist und die äußeren Halteteile im Wesentlichen ungebogen bleiben, wenn das Verriegelungselement sich federnd zwischen der verriegelten und der freigegebenen Position verbiegt, und
wobei das Verriegelungselement eine Betätigungsverlängerung (14) aufweist, die nach oben und außerhalb der äußeren Halteteile der Halterungsaufnahme vorsteht, **dadurch gekennzeichnet,**
**dass** das Verriegelungselement eine Verriegelungsschulter (13) aufweist, die sich zumindest teilweise über den Zwischenraum zwischen den einander gegen-überliegenden Halteflächen erstreckt, und
**dass** das Verriegelungselement eine geneigte Einführungsfläche (14) aufweist, die an einer Spitze mit der Verriegelungsschulter endet.

2. Verbindungssystem nach Anspruch 1, **dadurch gekennzeichnet, dass** das Verriegelungselement (11) einen federnd flexiblen Arm aufweist.

3. Verbindungssystem nach einem oder mehreren der vorhergehenden Ansprüche, **dadurch gekennzeichnet, dass** der Halterungseinsatz, wenn er im Eingriff mit der Halterungsaufnahme ist, einen Abschnitt hat, der sich nach außen durch die Öffnung der Halterungsaufnahme über das Verriegelungselement hinaus erstreckt.

4. Verbindungssystem nach einem oder mehreren der vorhergehenden Ansprüche, **dadurch gekennzeichnet, dass** der Halterungseinsatz Flächen aufweist, die so angeordnet sind, dass sie an den einander gegenüberliegenden Halteteilen der Halterungsaufnahme anstoßen oder nahe daran liegen.

5. Verbindungssystem nach einem oder mehreren der vorhergehenden Ansprüche, **dadurch gekennzeichnet, dass** der Halterungseinsatz eine Fläche aufweist, die ausgebildet ist, um auf einem entsprechenden geschlossenen Endabschnitt des Zwischenraums zwischen den einander gegenüberliegenden Halteteilen der Halterungsaufnahme aufzuliegen.

6. Verbindungssystem nach einem oder mehreren der vorhergehenden Ansprüche, **dadurch gekennzeichnet, dass** eine der Halterungsanordnungen (Halterungseinsatz oder Halterungsaufnahme) von einem Fahrzeugkühler getragen wird, und dass die andere Halterungsanordnung von einer Komponente zur Verbindung mit dem Kühler getragen wird.

7. Verbindungssystem nach Anspruch 6, **dadurch gekennzeichnet, dass** die Komponente zum Befestigen an dem Fahrzeugkühler ein Lüfter oder ein Kondensator oder ein Ladeluftkühler ist.

8. Verbindungssystem mit einer Mehrzahl von Systemen nach einem oder mehreren der vorhergehenden Ansprüche, bei der die Vielzahl von Halterungsaufnahmen durch eine entsprechende Komponente an im Abstand voneinander liegenden Abschnitten getragen werden und die Halterungseinsätze durch eine andere entsprechende Komponente in entsprechendem Abstand zum Eingriff in entsprechende Halterungsaufnahmen getragen werden.

9. Anordnung zum Befestigen in einem Fahrzeugmotorraum, **dadurch gekennzeichnet, dass** die Anordnung Komponenten enthält, die unter Benutzung eines Verbindungssystems nach einem oder mehreren der vorhergehenden Ansprüche aneinander befestigt werden.

10. Anordnung zum Befestigen in einem Fahrzeugmotorraum nach Anspruch 9, **dadurch gekennzeichnet, dass** die Anordnung einen Fahrzeugkühler und eine andere Komponente enthält, die neben der Fläche der Kühlers unter Benutzung eines Verbindungssystems nach einem oder mehreren der Ansprüche 1 bis 8 befestigt ist.

11. Verfahren zum Zusammenfügen von Komponenten, **dadurch gekennzeichnet, dass** die Komponenten mit entsprechenden Halterungseinsätzen oder Halterungsaufnahmen gemäß dem Verbindungssystem nach einem oder mehreren der Ansprüche 1 bis 8 versehen werden, wobei das Verfahren das Eingreifen des Halterungseinsatzes in die entsprechende Halterungsaufnahme bis zu einer Position einschließt, in der das Verriegelungselement in die Verriegelungsposition eingreift.

## Revendications

1. Système de connexion (1) pour assurer le montage de composants dans un compartiment moteur de véhicule, le système comprenant :
un agencement de support mâle (2) ; et
un agencement de support femelle (3), l'agencement de support femelle (3) comprenant des parties de retenue internes et externes opposées (9, 9') définissant un espace entre elles, l'agencement de support mâle s'accouplant avec l'agencement de support femelle via l'espace entre les parties de retenue opposées, l'agencement de support femelle comprenant en outre un élément de détente amovible (11), où les parties de retenue externes (9, 9') sont des parties formant doigts et sont prévues de chaque côté de façon adjacente à l'élément de détente agencées de sorte à faire face à l'agencement mâle en position accouplée, où ledit élément de détente amovible est mobile entre une position de détente dans laquelle le retrait de la partie d'agencement mâle hors de l'agencement femelle est sensiblement inhibé, et une position de libération dans laquelle le retrait de la partie d'agencement mâle en dehors de l'engagement avec l'agencement femelle est permis, l'élément de détente étant sollicité de façon élastique par une connexion souple élastique (12) comprenant l'agencement femelle et dans lequel les parties formant doigts de retenue externes restent sensiblement non défléchies lorsque l'élément de détente fléchit de façon élastique entre les positions de détente et de libération et l'élément de détente comprend un prolongement d'actionnement (14) qui fait saillie vers le haut et vers l'extérieur de la partie de retenue externe du support femelle, **caractérisé en ce que** l'élément de détente comprend un épaulement de détente (13) s'étendant au moins en partie à travers l'espace entre les parties de retenue opposées et dans lequel l'élément de détente comprend une surface avant inclinée (14) se terminant à un sommet avec l'épaulement de détente.

2. Système de connexion selon la revendication 1, dans lequel l'élément de détente (11) comprend un bras flexible élastiquement.

3. Système de connexion selon l'une quelconque des revendications précédentes, dans lequel l'élément de support mâle, lorsqu'il est engagé en accouplement avec l'élément de support femelle, a une partie qui s'étend vers l'extérieur à travers la cavité de l'agencement femelle au-delà de l'élément de détente.

4. Système de connexion selon l'une quelconque des revendications précédentes, dans lequel l'agencement de support mâle comprend des surfaces agencées pour venir en butée ou reposer de façon étroitement adjacente aux parties de retenue opposées de l'agencement de support femelle.

5. Système de connexion selon l'une quelconque des revendications précédentes, dans lequel l'agencement de support mâle comprend une surface agencée pour reposer sur une partie d'extrémité fermée correspondante de l'espace entre les parties de retenue opposées de l'agencement de support femelle.

6. Système de connexion selon l'une quelconque des revendications précédentes, dans lequel l'un des agencements de support est supporté par un radiateur de véhicule, l'autre côté des agencements de support étant supporté par un composant destiné à être connecté au radiateur.

7. Système de connexion selon la revendication 6, dans lequel le composant destiné à être monté sur le radiateur de véhicule est un ventilateur ou un condenseur ou un refroidisseur d'air d'admission.

8. Système de connexion comprenant une pluralité de systèmes selon l'une quelconque des revendications précédentes, la pluralité d'éléments de support femelles étant supportée par un composant respectif au niveau de parties espacées, les éléments de support mâles étant supportés par un autre composant respectif selon une relation espacée correspondante pour mise en prise avec des agencements de support femelles respectifs correspondants.

9. Ensemble destiné à être monté dans un compartiment moteur de véhicule, **caractérisé en ce que** l'ensemble comprend des composants montés les uns sur les autres en utilisant un système de connexion selon l'une quelconque des revendications précédentes.

10. Ensemble destiné à être monté dans un compartiment moteur de véhicule selon la revendication 9, l'ensemble comprenant un radiateur de véhicule et un autre composant monté de façon adjacente à la face du radiateur en employant un système de connexion selon l'une quelconque des revendications 1 à 8.

11. Procédé d'assemblage de composants, **caractérisé en ce que** les composants sont munis de supports respectifs conformément au système de connexion selon l'une quelconque des revendications 1 à 8, le procédé comprenant la mise en prise de l'élément de support mâle avec un élément de support femelle respectif à une position dans laquelle l'élément de détente se met en prise dans la position de détente.
